# EUROPÄISCHE PATENTSCHRIFT

(11) **EP 0 962 497 B1**
(45) Veröffentlichungstag und Bekanntmachung des Hinweises auf die Patenterteilung: **18.07.2001**
(21) Anmeldenummer: 99110226.0
(22) Anmeldetag: 26.05.1999
(51) Int. Cl.: C09B 11/24, C07H 21/00, C12Q 1/68, G01N 33/58

(54) **Rhodamin-Derivate und deren Verwendung in diagnostischen Systemen**
Rhodamine derivates and their use in diagnostic systems
Dérivés de rhodamine et leur utilisation en systèmes de diagnostic

(30) Priorität: 03.06.1998 DE 19824535
(43) Veröffentlichungstag der Anmeldung: 08.12.1999
(73) Patentinhaber: Roche Diagnostics GmbH, 68298 Mannheim (DE)
(72) Erfinder: Josel, Hans-Peter, Dr., 82362 Weilheim (DE); Herrmann, Rupert, Dr., 82362 Weilheim (DE); Heindl, Dieter, Dr., 82327 Tutzing (DE); Muehlegger, Klaus, 82398 Polling (DE); Sagner, Gregor, Dr., 82377 Penzberg (DE); Drexhage, Karl Heinz, Prof. Dr., 57076 Siegen (DE); Frantzeskos, Jörg, 57482 Wenden (DE); Arden-Jacob, Jutta, Dr., 90513 Zirndorf (DE)

(56) Entgegenhaltungen:
- EP-A- 0 285 179
- EP-A- 0 543 333
- EP-A- 0 805 190
- WO-A-97/49769
- FR-A- 2 300 119
- WITTWER C T ET AL: "CONTINUOUS FLUORESCENCE MONITORING OF RAPID CYCLE DNA AMPLIFICATION" BIOTECHNIQUES, Bd. 22, Nr. 1, 1. Januar 1997 (1997-01-01), Seiten 130/131, 134-138, XP000683698 ISSN: 0736-6205

## Beschreibung

Die beanspruchte Erfindung betrifft neue pentacyclische Rhodaminderivate, deren Fluoreszenzemissionsmaxima im Bereich von ca 520 bis 720 nm liegen, mit diesen Derivaten markierte Biomoleküle sowie deren Verwendung in diagnostischen Systemen.

Es sind zahlreiche Rhodamin-Derivate bekannt, die als hydrophile Derivate mit entsprechenden reaktiven Gruppen als Marker (Label-Substanz) eingesetzt werden können. Derartige Verbindungen erhält man beispielsweise durch Umsetzung mit NHS-Estern von Tetramethylcarboxyrhodamin oder Carboxyrhodamin 101 (RHODOS) mit aminogruppenhaltigen Proteinen, die in diagnostischen Systemen eingesetzt werden. Beispiele für Hapten-Fluoreszenz-Konjugate sind in EP-A-285179 beschrieben, die dort beschriebenen Verbindungen besitzen jedoch Absorptionsmaxima bei Wellenlängen kleiner 600 nm.

EP 0 543 333 offenbart langwellige Rhodamin-ähnliche Derivate, die ein Absorptionsmaximum von über 600 nm besitzen. Eine Überführung der dort beschriebenen Verbindungen in entsprechende Phosphoramidite war zum Zeitpunkt der Erfindung jedoch nicht bekannt.

EP 0 567 622 offenbart ebenfalls die Herstellung von langwelligen Rhodamin-Derivaten mit Absorptionsmaxima über 600 nm. Die Synthese entsprechender Nukleinsäurekonjugate sowie die Verwendung der beschriebenen Verbindungen als eine Komponente von Fluoreszenz-Resonanz-Energie-Transfer Systemen, wie sie Eingang in die Nukleinsäureanalytik gefunden haben (BioTechniques Vol. 22, No. 1, p.130-138, 1997), wurde jedoch bisher nicht beschrieben.

Der Fluoreszenzfarbstoff Fluorescein ist aufgrund seiner spektralen Eigenschaften sowie seiner allgemeinen Verfügbarkeit weit verbreitet und wird für eine breite Palette von Anwendungen eingesetzt. In sogenannten FRET-Systemen funktioniert Fluorescein in der Regel als Fluoreszenz-Resonanz-Energie-Donor, wobei abhängig von der analytischen Testführung potentiell verschiedene Fluoreszenz-Resonanz-Energie-Akzeptoren eingesetzt werden können. Der Einsatz von FRET-Systemen in der Nukleinsäure-Analytik ist bisher jedoch auf die Verwendung von Cyanin-Derivaten wie Cy5 (PCR Methods Appl.4, 357-362, 1995) sowie die Rhodamin-Derivate TAMRA und ROX (Anal. Biochem. 252, 78-88, 1997) beschränkt.

Aufgabenstellung der vorliegenden Erfindung ist deshalb die Bereitstellung von neuen Rhodaminderivaten mit verbesserten spektralen Eigenschaften im langwelligen Bereich, die insbesondere dazu geeignet sind, zusammen mit anderen Farbstoffen ein Fluoreszenz-Resonanz-Elektronen-Transfer-Paar zu bilden, sodaß mit den Rhodamin-Derivaten markierte Biomoleküle für analytische oder diagnostische Zwecke eingesetzt werden können.

Gegenstand der Erfindung sind deshalb Verbindungen der allgemeinen Formel 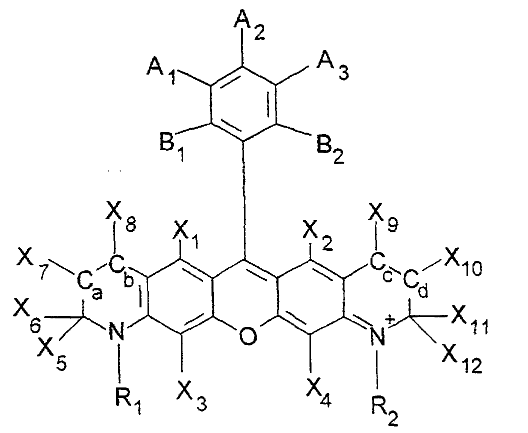 wobei Ca-Cd jeweils ein C-Atom bedeutet und Ca mit Cb sowie Cc mit Cd untereinander entweder durch eine Einfachbindung oder durch eine Doppelbindung miteinander verbunden sind; X1 bis X12 unabhängig voneinander entweder Halogen, Sulfonsäure, Wasserstoff oder einen Alkylrest mit 1-20 C-Atomen bedeuten, wobei der Alkylrest mit einem oder mehreren Halogen- oder Sulfonsäureresten substituiert sein kann. R1 und R2 sind entweder identisch oder verschieden und bedeuten entweder Wasserstoff, Alkyl mit 1-20 C-Atomen, Polyoxyhydrocarbyleinheiten, Phenyl oder Phenylalkyl mit 1-3 Kohlenstoffatomen in der Alkylkette, worin die Alkyl- und/oder Phenylreste durch eine oder mehrere Hydroxy-, Halogen-, Sulfonsäure-, Amino-, Carboxy- oder Alkoxycarbonylgruppen, worin Alkoxy 1-4 Kohlenstoffatome besitzen kann, substituiert sein können. R1 enthält mindestens eine aktivierbare Gruppe die entweder eine Aminogruppe, eine Hydroxylgruppe oder eine Cardoxylgruppe ist. R2 und X4 können fakultativ über eine Brücke bestehend aus 0-2 C-Atomen miteinander verknüpft sein. Gekennzeichnet sind diese Verbindungen im Unterschied zum vorbekannten Stand der Technik dadurch, daß A1, A2 und A3 unabhängig voneinander Halogen, Cyano, Wasserstoff, Carbonsäure, Phosphorsäure oder Sulfonsäure bedeuten können; B1 entweder Halogen, Cyano oder Wasserstoff bedeutet; und B2 ausgewählt wird aus einer Gruppe bestehend aus Wasserstoff, Amid, Halogen und einem Alkylrest mit 1-20 C-Atomen.

Als vorteilhaft hat sich herausgestellt, wenn mindestens ein Rest der Gruppe A1, A2, A3 und B1 ein Halogen, insbesondere Fluor oder Chlor, darstellt.Vorzugsweise handelt es sich bei allen Resten A1, A2,A3, B1 um Halogene, insbesondere Fluor oder Chlor. Die Herstellung derartiger Verbindungen ist dann vergleichsweise einfach, wenn es sich bei allen Resten A1, A2, A3 und Blentweder nur um Fluor oder aber nur um Chlor handelt. Weiterhin bevorzugt sind Verbindungen, bei denen B2 identisch mit einem Wasserstoffatom ist. Alternativ kann B2 jedoch auch Fluor oder Chlor bedeuten, wobei solche Verbindungen besonders einfach zu synthetisieren sind, bei denen es sich bei sämtlichen Resten A1, A2, A3, B1 und B2 entweder nur um Fluor oder aber nur um Chlor handelt.

Bei den Resten X1, X2, X3, X4, X7, und X10 handelt es sich vorzugsweise um Wasserstoff. Bei den Resten X5, X6, X8, X9, X11, und X12, handelt es sich vorzugsweise um Methylreste. Besonders bevorzugt sind solche Verbindungen, in denen sämtliche Reste X1, X2, X3, X4, X7 und X10 Wasserstoffreste darstellen und sämtliche Reste X5, X6, X8, X9, X11 und X12 Methylreste darstellen.

Die Reste R1 und R2 können entweder identisch oder verschieden sein, wobei jedoch mindestens R1 eine aktivierbare Gruppe Amino, Hydroxyl oder Carboxyl enthält. Vorzugsweise enthält Rl genau eine aktivierbare Gruppe. In einer besonders bevorzugten Ausführungsform handelt es sich bei R1 um einen Hydroxyethylrest oder aber um einen Carboxypropylrest.

Für den Fall, daß R2 von R1 verschieden ist, handelt es sich bei R2 vorzugsweise um Wasserstoff oder ein Alkyl mit 1 bis 20 C-Atomen. Besonders bevorzugt handelt es sich dabei um Wasserstoff oder um einen Ethylrest.

Mit den erfindungsgemäßen Verbindungen werden Moleküle bereitgestellt, die sich aufgrund ihrer spektralen Eigenschaften (Absorptionsmaxima im Bereich von ca.500 nm und darüber sowie Emissionsmaxima im Bereich zwischen ca. 520 und 720 nm) sehr gut als Farbstoffe und insbesondere Fluoreszenzfarbstoffe eignen. Dabei können die spektralen Eigenschaften der Moleküle dadurch verändert werden, daß Identität, Anzahl und Position der Halogenreste bezüglich A1, A2, A3 und B1 verändert werden. Auf diese Weise lassen sich Fluoreszenzfarbstoffe mit nahezu beliebigen Absorptions- und Emissionsmaxima im Bereich zwischen ca. 520 nm und 720 nm herstellen. Gegenstand der Erfindung ist somit auch die Verwendung der erfindungsgemäßen Rhodamin-Derivate als Fluoreszenzfarbstoff.

Zur Herstellung von Konjugaten, welche die erfindungsgemäßen Rhodaminderivate enthalten, können aktivierte Derivate synthetisiert werden, die beispielsweise zur Markierung von Biomolekülen oder anderen analytischen Reagenzien geeignet sind. Die Herstellung der aktivierten Derivate erfolgt über mindestens eine der aktivierbaren Gruppen an den Resten R1 und R2, wobei die Aktivierung nach vorbekannten Standardprotokollen erfolgen kann, die dem Fachmann bekannt sind. In der Regel erfolgt die Aktivierung über mindestens eine Hydroxylgruppe, Amino- oder Carboxylgruppe von R1 und R2.

Abhängig vom späteren Verwendungszweck können verschiedene reaktive Gruppen eingeführt werden. Phosphoramidite und H-Phosphonate können beispielsweise von einer Hydroxylgruppe abgeleitet werden. Die Herstellung von Rhodamin-Phosphoramiditen bzw. H-Phosphonaten erfolgt somit in der Regel nach vorbekannten Protokollen (Methods in Mol. Biol. Vol 20, "Protocols for Oligonucleotides and Analogs, Synthesis and Properties", S. Agrawal Hrsg., Humana Press Totowa, NJ).

N-Hydroxy-Succininimid (NHS)-Ester und Maleinimid-Alkylamide werden dagegen in der Regel von einer Carboxylgruppe abgeleitet. Die Herstellung von NHS-Estern erfolgt dabei vorzugsweise nach dem in EP 0 543 333 beschriebenen Verfahren, wobei die freie Carbonsäure mit NHS in Gegenwart eines Kondensationsreagenzes wie beispielsweise DCC oder MEI umgesetzt wird. Die Herstellung von Rhodamin-Isothiocyanaten erfolgt vorzugsweise durch Reaktion von Aminogruppen mit Thiophosgen (Advanced Organic Chemistry, Mc Graw Hill, 2^{nd} edition, S. 383, 1997).

Gegenstand der Erfindung sind somit auch aktivierte Derivate der erfindungsgemäßen Rhodamine. Vorzugsweise handelt es sich bei den reaktiven Gruppen der aktivierten Derivate um Phosphoramidit, N-Hydroxy-Succininimid (NHS)-Ester, Maleinimid-Alkylamid, H-Phosphonat oder Isothiocyanat.

Gegenstand der Erfindung sind ferner Konjugate, die durch Bindung erfindungsgemäßer Rhodaminverbindungen bzw. deren aktivierter Derivate erhältlich sind. Derartige Konjugate bestehen folglich aus mindestens zwei Komponenten, von denen eine Komponente ein erfindungsgemäßes Rhodamin-Derivat darstellt. Ausgehend von den aktivierten Derivaten erfolgt die Herstellung der Konjugate nach Standardprotokollen. Die jeweils geeigneten Konjugationsmethoden sind dem Fachmann bekannt.

Die erfindungsgemäßen Konjugate können für analytische Zwecke eingesetzt werden, sobald eine zweite Komponente des Konjugates an einen zu bestimmenden Bindungspartner binden kann, und der gebildete Komplex nach Anregung mit Licht einer geeigneten Absorptionswellenlänge dadurch nachgewiesen wird, daß die emittierte Fluoreszenz des gebildeten Komplexes detektiert wird.

Besonders geeignet ist der Einsatz der erfindungsgemäßen Konjugate für Analysen zu diagnostischen Zwecken, bzw. für Analysen von medizinischem oder biologischem Material. Gegenstand der Erfindung sind daher insbesondere solche Konjugate, die mit einem Biomolekül interagieren können. Dabei handelt es sich in der Regel um Konjugate, die als weitere Komponente in der Regel selbst ein oder mehrere Biomoleküle enthalten.

Bei diesen, in den Konjugaten enthaltenen Biomolekülen kann es sich beispielsweise um einzelsträngige oder doppelsträngige Nukleinsäuren wie DNA, RNA, Oligonukleotide sowie Oligonukleotid-Derivate und modifizierte Nukleinsäureanaloga wie zB PNA, aber auch einzelne Nukleotide, Nukleotid-Derivate, Nukleotid-Analoga oder Nukleosid-Triphosphate handeln. Die Markierung derartiger Moleküle erfolgt an der 5'- Position bevorzugt über einen NHS-Ester oder ein Phosphoramidit, an der 3'- Position dagegen bevorzugt über ein Farbstoff-substituiertes Trägermaterial wie zum Beispiel CPG. Die Markierung an anderen Stellen wie beispielsweise den Nukleinsäure-Basen erfolgt ebenfalls vorzugsweise über einen NHS-Ester.

Im Falle einer Markierung von Proteinen, Proteinkomplexen, Antikörpern oder Aminosäuren wird die Konjugation bevorzugt über Isothiocyanat durchgeführt. Beispiele für weitere Konjugatkomponenten sind Vitamine, Steroid-Hormone, Lipidmoleküle sowie Haptene. Darüber hinaus können auch komplexere biologische Strukturen wie Membranfraktionen oder ganze Zellen entsprechend markiert werden.

Eine besondere Ausführungsform der erfindungsgemäßen Konjugate stellen Oligonukleotide dar, die mit einem erfindungsgemäßen Rhodamin-Derivat konjugiert sind. Auf diese Weise markierte Oligonukleotide können für vorbekannte Methoden der Detektion und Analyse von Nukleinsäuren, beispielsweise durch in situ Hybridisierung (Meyne and Myzis, Methods Mol. Biol. 33, 63-74, 1994) oder auch als Primer bei verschiedenen Sequenzierverfahren zum Einsatz kommen (Sheealy et al., Anal. Chem. 67, 247-251, 1995).

Neben der chemisch-synthetischen Markierung von Nukleinsäuren können mit erfindungsgemäßen Rhodaminfarbstoffen markierte Substrate für Nukleinsäurepolymerasen wie Ribonukleosidtriphosphate bzw. Desoxyribonukleosidtriphosphate durch verschiedene enzymatische Reaktionen in Nukleinsäuren eingebaut werden. Dies geschieht für DNA mithilfe von DNA-Polymerasen beispielsweise mit der Methode der Nick Translation (Rigby et al., J. Mol. Biol. 113, S. 237, 1977) oder durch "Random Primed Labeling" (Feinberg and Vogelstein, Anal. Biochem. 137, S. 266, 1984). Im Falle von RNA geschieht dies beispielsweise durch T3, T7 oder SP6 RNA-Polymerasen im Sinne einer Transkription. Eine weitere Methode der Markierung von Nukleinsäuren ist über eine sogenannte "3'-tailing-Reaktion mit Hilfe von terminaler Transferase möglich.

Gegenstand der Erfindung ist somit auch die Verwendung erfindungsgemäßer Konjugate zur Markierung von Nukleinsäuren durch chemische oder enzymatische Methoden sowie die Verwendung erfindungsgemäß markierter Hybridisierungssonden zur Detektion und Analyse von Nukleinsäuren.

Für einen analytischen Nachweis wird das erfindungsgemäße Rhodamin-Derivat zunächst mit Licht einer geeigneten Wellenlänge angeregt, wobei als Lichtquelle beispielsweise Laser, Laserdioden oder LEDs verwendet werden. Die Detektion der Fluoreszenz erfolgt je nach Analyt durch Meßmethoden, die dem Fachmann bekannt sind. Beispiele hierfür sind Fluoreszenzmikroskopie für in-situ Methoden oder aber die Detektion der emittierten Strahlung durch geeignete Photodioden.

Alternativ zur direkten Anregung des erfindungsgemäßen Farbstoffs mit Strahlungsenergie geeigneter Wellenlänge kann die Anregung auch durch einen sogenannten Fluoreszenz-Resonanz-Energie-Transfer erfolgen. Bei diesem Prinzip wird ein zweiter Fluoreszenzfarbstoff, beispielsweise Fluorescein, mit Licht einer geeigneten Wellenlänge angeregt. Aufgrund der räumlichen Nähe der beiden Farbstoffe findet daraufhin ein sogenannter nicht-radiativer, also strahlungsloser Energie-Transfer auf das erfindungsgemäße Rhodamin-Derivat statt (Van der Meer et al., Resonance Energy Transfer, VCH, 1994). Die Detektion des von diesem Molekül bei einer bestimmten Wellenlänge emittierten Lichtes kann bevorzugt der quantitativen Bestimmung des Analyten dienen. Gegenstand der Erfindung ist somit auch die Verwendung eines erfindungsgemäßen Rhodamin-Derivates bzw eines entsprechenden Konjugates als Bestandteil eines Fluoreszenz-Resonanz-Energie-Transfer-Systems.

Vorzugsweise dienen dabei die erfindungsgemäßen Verbindungen als Resonanz-Energie-Akzeptoren, wobei sich Verbindungen mit den folgenden Strukturformeln als besonders geeignet herausgestellt haben:

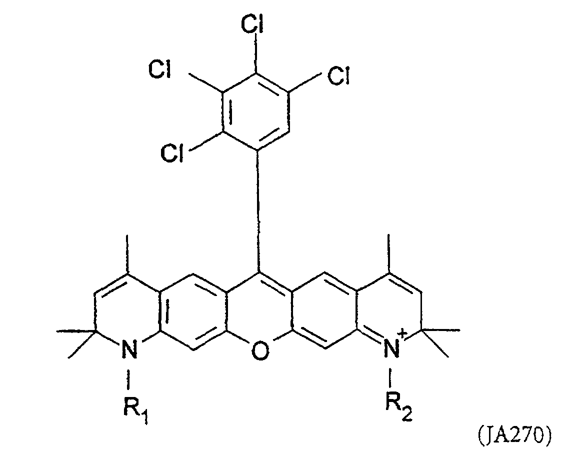

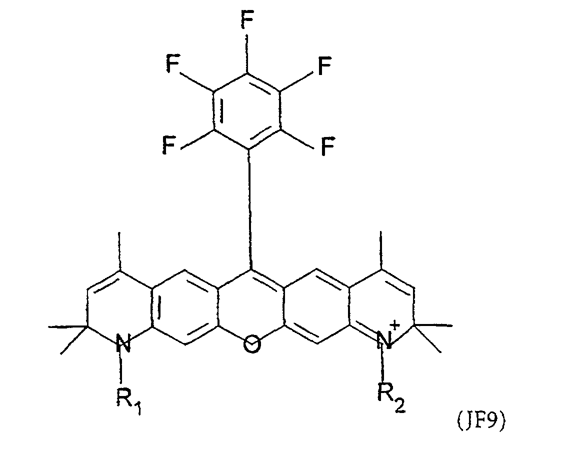

Bevorzugte Resonanz-Energie-Donoren für alle erfindungsgemäßen Verbindungen, insbesondere auch JA 270 und JF9, sind Fluorescein oder Fluorescein-Konjugate. Gegenstand der Erfindung ist somit auch die Verwendung erfindungsgemäßer Rhodaminderivate bzw. entsprechender Konjugate zusammen mit Fluorescein bzw. entsprechender Konjugate als Fluoreszenz-Resonanz-Energie-Akzeptor in einem Fluoreszenz-Resonanz-Energie-Transfer-System.

Für den quantitativen Nachweis von Nukleinsäuren sind mit Fluoreszenzfarbstoffen markierte Hybridisierungssonden wie beispielsweise Oligonukleotide geeignet, die nach dem Prinzip des Fluoreszenz-Resonanz-Energie-Transfers (FRET) detektiert werden können. Beispielsweise kann im Falle von Oligonukleotiden das 5' Ende mit jeweils einer Farbstoff-Komponente des FRET Systems sowie das 3' Ende mit der jeweils anderen Farbstoff-Komponente des FRET Systems markiert sein. In alternativen Ausführungsformen können die Oligonukleotide auch intern markiert sein.

In einer bestimmten Ausführungsform wird ein solches mit 2 Farbstoffen markiertes Oligonukleotid während einer Nukleinsäureamplifikation zur Detektion der entstehenden Produkte eingesetzt, wobei die Emission des Fluoreszenz-Resonanz-Energie-Donors bestimmt wird. Ist das Oligonukleotid nicht an das Target gebunden, so ist aufgrund des strahlungsfreien Energietransfers keine Fluoreszenz des Donors meßbar. Bindet jedoch das Oligonukleotid an die Target DNA, so werden aufgrund von Exonukleaseaktivitäten der verwendeten DNA-Polymerase die zwei Farbstoffkomponenten räumlich voneinander getrennt, sodaß eine Fluoreszenz des FRET-Donors meßbar wird (US 5,210,015).

In bevorzugten Ausführungsformen befinden sich die verschiedenen Farbstoffe an zwei verschiedenenen Hybridisierungssonden, die in räumlicher Nähe an die Target-Nukleinsäure hybridisieren können. Dabei kann es sich beispielsweise um zwei Oligonukleotid-Sonden handeln, die an den gleichen Strang der Target-Nukleinsäure hybridisieren, wobei der eine Farbstoff sich am 3'-terminalen Nukleotid der ersten Sonde befindet und der andere Farbstoff sich am 5' terminalen Nukleotid der zweiten Sonde befindet, sodaß die Distanz zwischen beiden nur eine geringe Anzahl von Nukleotiden beträgt, wobei diese Anzahl zwischen 0 und 30 liegen kann. Bei Verwendung von Fluorescein in Kombination mit einem erfindungsgemäßen Rhodamin-Derivat wie beispielsweise JA 270 oder JF9 haben sich Abstände von 0-15, insbesondere 1-5 Nukleotiden und in vielen Fällen von einem Nukleotid als vorteilhaft herausgestellt. Unter Wahrung der Nukleotid-Abstände zwischen den Farbstoffkomponenten können auch Sonden verwendet werden, die nicht terminal, sondern intern mit einem der Farbstoffe konjugiert sind. Bei doppelsträngigen Target-Nukleinsäuren können auch Sonden eingesetzt werden, die an verschiedene Stränge des Targets binden, sofern ein bestimmter Nukleotidabstand von 0 bis 30 Nukleotiden zwischen den beiden Farbstoff-Komponenten eingehalten wird.

Gegenstand der Erfindung ist somit ferner die Verwendung eines erfindungsgemäßen Konjugates bestehend aus einem Oligonukleotid und einem erfindungsgemäßen Rhodamin-Derivat wie beispielsweise JA 270 oder JF 9 zur Analyse von Nukleinsäuren, wobei ein weiteres Konjugat, bestehend aus einem zweiten Oligonukleotid und einem weiteren Fluoreszenzfarbstoff, vorzugsweise Fluorescein, eingesetzt wird und nach Anregung eines Farbstoffs, welcher vorzugsweise an das zweite Oligonukleotid gekoppelt ist, ein Fluoreszenz-Resonanz-Energie-Transfer stattfinden kann. Entsprechend markierte Oligonukleotidkombinationen werden im Folgenden als "FRET-Paare" bezeichnet.

Als besonders vorteilhaft hat sich der Einsatz derartiger FRET-Paare zum Nachweis von Amplifikationsprodukten während oder nach einer Polymerase-Kettenreaktion herausgestellt. Gegenstand der Erfindung ist deshalb ferner die Verwendung eines erfindungsgemäßen Konjugates als Bestandteil eines FRET-Paares zur Detektion von Reaktionsprodukten einer Nukleinsäure-Amplifikationsreaktion. In einer besonderen Ausführungsform kann einer der beiden Amplifikationsprimer zugleich mit einem der beiden eingesetzten Farbstoffe markiert sein und somit eine der beiden Komponenten des FRET beisteuern.

Der Einsatz von geeigneten FRET-Paaaren zur Detektion der Amplifikationsprodukte ermöglicht ein sogenanntes "Real-Time Monitoring" von PCR-Reaktionen, wobei Daten zur Generierung des Amplifikationsprodukts in Abhängigkeit von der Zahl der durchlaufenen Reaktionszyklen ermittelt werden können. Dies geschieht in der Regel dadurch, daß aufgrund der Reaktions- und Temperaturbedingungen während des notwendigen Annealings der Amplifikationsprimer auch die Oligonukleotide des FRET-Paares an die Target-Nukleinsäure hybridisieren und bei geeigneter Anregung ein entsprechend meßbares Fluoreszenzsignal emittiert wird. Aufgrund der erhaltenen Daten kann somit die Menge der ursprünglich eingesetzten Target-Nukleinsäure quantitativ bestimmt werden. Deshalb kommt derartigen Ausführungsformen eine besondere Bedeutung bei quantitativen RT-PCR Experimenten zu, bei denen RNA-Konzentrationen einer biologischen Probe quantifiziert werden. Gegenstand der Erfindung ist somit auch die Verwendung von erfindungsgemäßen Konjugaten als Bestandteil eines FRET-Paares zur Detektion von Reaktionsprodukten einer Nukleinsäure-Amplifikationsreaktion, wobei das Reaktionsprodukt in jedem Zyklus detektiert wird. Gegenstand der Erfindung ist ferner die Verwendung von erfindungsgemäßen Konjugaten als Bestandteil eines FRET-Paares zur Durchführung einer quantitativen Bestimmung der zu amplifizierenden Nukleinsäure.

In einer anderen Ausführungsform erfolgt die Detektion des Amplifikationsproduktes nach Beendigung der Amplifikationsreaktion, wobei nach Hybridisierung des FRET-Paares an die zu detektierende Target-Nukleinsäure die Temperatur im Rahmen einer Schmelzkurvenanalyse wiederum kontinuierlich erhöht wird. Gleichzeitig wird die in Abhängigkeit von der Temperatur emittierte Fluoreszenz bestimmt Auf diese Weise werden Sequenzen detektiert, die aufgrund bestimmter Mismatches weniger stringent mit dem eingesetzten FRET-Paar hybridisieren. Die auf diese Weise ermittelten Schmelzpunkte dienen so dem Nachweis von Punktmutationen oder anderen Polymorphismen. Gegenstand der Erfindung ist deshalb auch die Verwendung von erfindungsgemäßen Konjugaten als Bestandteil eines FRET-Paares zur Bestimmung von Schmelzkurven, insbesondere bei der Identifikation von Polymorphismen und Punktmutationen.

### Beispiele

### Beispiel 1:

### Synthese eines erfindungsgemäßen Farbstoffes JA 270:

### 1-(2-Hydroyethyl -6- (2,3,4,5-tetrachlorophenil) 11-ethyl-2,2,4,8,10,11-hexamethyl-10,11 -dihydro-2H-13-oxa-11-aza-1-azonia-pentacene perchlorat

### 1. Stufe:

### 2,2,4-Trimethyl-7-methoxy-1,2-dihydrochinolin Mol. Gewicht: 203.05 g/mol

Zu 25ml Eisessig wurden bei 15-20°C 273g (2.2. mol) m-Anisidin und anschließend 221g (2.2 mol) Mesityloxid zugetropft. Dann wurde die Lösung ca. 18h bei Raumtemperatur gerührt. Anschließend wurden bei 20-30°C 500ml Bromwasserstoffsäure zugetropft. Nach einstündigem Rühren bei Raumtemperatur wurde der Niederschlag abfiltriert. Der noch feuchte Niederschlag wurde in ca. 1 l Aceton suspendiert, abfiltriert und getrocknet. 200g 2,2,4-Trimethyl-7-methoxy-1,2-dihydrochinolin-hydrobromid wurden in einer Mischung aus 1 I Wasser und 500ml Chloroform resuspendiert. Die Suspension wurde dann mit 10%iger Natronlauge neutralisiert. Die organische Phase wurde anschließend mit Wasser gewaschen, über Natriumsulfat getrocknet und in einem Rotationsverdampfer zur Trockene eingeengt. Das grün gefärbte Öl war nach kurzer Zeit erstarrt. Der Feststoff wurde aus Hexan umkristallisiert. Mit einer Ausbeute von 39% entstanden farblose Kristalle mit einem Schmelzpunkt von 67°C - 69°C.

### 2. Stufe:

### N-(2-Hydroxyethyl)-2,2,4-trimethyl-7-methoxy-1,2-dihydrochinolin Mol. Gewicht: 247 g/mol

50g (0.24 mol) 2,2,4-Trimethyl-7-methoxy-1,2-dihydrochinolin wurden mit 51g (0.4 mol) N,N-Diisopropylethylamin, 72.5g (0.57 mol) 2-Bromethanol und einer Spatelspitze Kaliumiodid versetzt. Die Lösung wurde 24 Stunden bei 110 bis 120°C verrührt. Die organische Phase wurde anschließend mit verdünnter Natronlauge und Wasser gewaschen und über Natriumsulfat getrocknet. Das Lösungsmittel wurde sodann vollständig abdestilliert. Als Produkt wurde ein hellgrünes Öl erhalten.

### 3. Stufe:

### Essigsäure-(2-(2,2,4-trimethyl-7-methoxy-1,2-dihydrochinol-1-yl)-ethyl)-ester Mol. Gewicht: 289 g/mol

10g (0.04 mol) N-(2-Hydroxyethyl)-2,2,4-trimethyl-7-methoxy-1,2-dihydrochinolin wurden mit 18g (0.17 mol) Acetanhydrid versetzt. Dazu wurden 10 Tropfen konz. Schwefelsäure hinzugetropft und 1 h auf 100 bis 110°C erhitzt. Die Reaktionsmischung wurde auf Eis gegossen und mit Chloroform extrahiert. Die vereinigten organischen Phasen wurden über Natriumsulfat getrocknet und destilliert. Das entstandene hellgelbe Öl besaß einen Siedepunkt von 140°C/ / 10⁻³mbar.

### 4. Stufe

### N-Ethyl-2,2,4-trimethyl-7-methoxy-1,2-dihydrochinolin Mol. Gewicht: 231,2 g/mol

100g (0.49 mol) 2,2,4-Trimethyl-7-methoxy-1,2-dihydrochinolin wurden mit 103g (0.8 mol) N,N-Diisopropylethylamin und 231g (1.5 mol) Diethylsulfat versetzt. Die Lösung wurde 24 h um Rückfluß erhitzt. Die Reaktionsmischung wurde mit 100ml 10%iger wässriger Natronlauge sowie 200ml Chloroform versetzt und anschließend auf Raumtemperatur abgekühlt. Anschließend wurde die organische Phase mehrmals mit Wasser gewaschen und über Natriumsulfat getrocknet. Das Lösungsmittel wurde vollständig abdestilliert. Der Rückstand wurde fraktioniert destilliert. Es wurde ein hellgelbes Öl mit einem Siedepunkt von 94 - 96°C / 0.01 Torr isoliert.

### 5. Stufe:

### N-Ethyl-7-hydroxy-2,2,4-trimethyl-1,2-dihydrochinolin-hydrobromid Mol. Gewicht: 298.1 g/mol

60g (0.26 mol) N-Ethyl-2,2,4-trimethyl-7-methoxy-1,2-dihydrochinolin wurden in 150ml Eisessig gelöst und mit 150ml Bromwasserstoffsäure versetzt. Die Lösung wurde 24 h zum Rückfluß erhitzt. Die abgekühlte Lösung wurde im Eis/Methanol-Bad verrührt. Anschließend wurde der Niederschlag abfiltriert und mehrfach mit Aceton gewaschen. Mit einer Ausbeute von 85% entstanden farblose Kristalle.

### 6. Stufe:

### N-Ethyl-7-hydroxy-2,2,4-trimethyl-1,2-dihydrochinolin Mol. Gewicht: 217.2 g/mol

200g N-Ethyl-7-hydroxy-2,2,4-trimethyl-1,2-dihydrochinolin-hydrobromid wurden in einer Mischung aus 1 l Wasser und 500ml Chloroform suspendiert. Diese Suspension wurde solange mit 20%iger Natriumacetatlösung versetzt, bis ein pH-Wert von ca. 5 erreicht wurde. Die organische Phase wurde mit Wasser gewaschen, über Natriumsulfat getrocknet und im Rotationsverdampfer zur Trockene eingeengt. Auf diese Weise wurde ein hellbraunes Öl erhalten. Da sich die freigesetzte Base sehr schnell zersetzt, wurde nur soviel Base aus dem Hydrobromid freigesetzt, wie für den weiteren Ansatz benötigt wurde.

### 7. Stufe:

### 6-(2-Carboxy-3,4,5,6-tetrachlorbenzoyl)-1,2-dihydro-1-ethyl-7-hydroxy-2,2,4-trimethylchinolin Mol. Gewicht: 503.2 g/mol

24g (0.11 mol) N-Ethyl-7-hydroxy-2,2,4-trimethyl-1,2-dihydrochinolin und 31.6g (0.11 mol) Tetrachlorphthalsäureanhydrid wurden in 200ml 1,2-Dichlorethan gelöst und 3 h zum RückfluB erhitzt. Nach dem Abkühlen der Lösung wurde filtriert und im Rotationsverdampfer zur Trockene eingeengt. Der Rückstand wurde in ca. 500ml Chloroform suspendiert und zum Sieden erhitzt. Der Feststoff (=Produkt) wurde abfiltriert. Um die Ausbeute zu steigern, wurde die Mutterlauge zur Trockene einrotiert und säulenchromatographisch gereingt. Dabei wurden für ca. 3g Rohprodukt ca. 100g Kieselgel (ICN Silica 32-63, 60A) als Trennmaterial eingesetzt. Als Fließmittel diente eine Mischung aus Chloroform + 5% Ethanol.
Der abfiltrierte Feststoff wurde in ca. 1 l Diethylether gelöst. Nach dem Filtrieren wurde das Lösungsmittel abdestilliert und der Rückstand getrocknet, wobei ein gelber Feststoff entstand.

### 8. Stufe:

### 1-(2-Hydroxyethyl)-6-(2,3,4,5-tetrachlorophenyl)-11-ethyl-2,2,4,8,10,11 -hexamethyl-10,11-dihydro-2H-13-oxa-11-aza-1-azonia-pentacene perchlorat (JA270) Mol. Gewicht: 756.5 g/mol

8.7g (0.017 mol) 6-(2-Carboxy-3,4,5,6-tetrachlorbenzoyl)-1,2-dihydro-1-ethyl-7-hydroxy-2,2,4-trimethylchinolin und 5g (0.017 mol) Essigsäure-(2-(2,2,4-trimethyl-7-hydroxy-1,2-dihydrochinol-1-yl)-ethyl)-ester wurden in 500ml Dichlormethan solange zum Rückfluß erhitzt, bis alle Komponenten in Lösung gegangen waren. Danach wurde vorsichtig und unter Rühren 20g Phosphorpentoxid hinzugegeben und 1 h zum Sieden erhitzt. Anschließend wurde das Lösungsmittel im Vakuum abdestilliert und der Rückstand mit 100ml 70%iger Schwefelsäure versetzt. Die sich langsam rot färbende Lösung wurde 40 min bei 120°C verrührt. Nach dem Abkühlen wurde die Reaktionsmischung langsam in 500ml eisgekühltes Ethanol gegossen und filtriert. Zur filtrierten Lösung wurden 50ml 60%ige Perchlorsäure und 5 I Wasser hinzugetropft. Der ausgefallene Farbstoff wurde abfiltriert und über Phosphorpentoxid im Exsikkator getrocknet (Ausbeute: 5.6g). Ca. 2g des Rohproduktes wurden in einer Mischung aus 60ml Aceton und 50ml N Salzsäure gelöst und 20 h zum Rückfluß erhitzt. Nach dem Abkühlen wurde der Farbstoff durch den Zusatz von Perchlorsäure und Wasser ausgefällt und getrocknet. Der Farbstoff wurde dann säulenchromatographisch (Alox N / Ethanol) vorgereinigt. Anschließend wurde die Farbstoff-Fraktion filtriert, eingeengt und erneut ausgefällt. Ca. 1g des Farbstoffes wurden dann in o-Dichlorbenzol gelöst und 5 h zum Rückfluß erhitzt. Anschließend wurde das Lösungsmittel im Wasserstrahlvakuum abdestilliert. Der Rückstand wurde noch dreimal mit ca. 50ml Wasser destilliert. Danach wurde der Rückstand in Ethanol aufgenommen und filtriert. Durch den Zusatz von Perchlorsäure und Wasser wurde der Farbstoff erneut ausgefällt. Als Absorptionsmaximum in Ethanol wurde eine Wellenlänge von 615mm bestimmt. Die auf diese Weise synthetisierte Verbindung besitzt folgende Strukturformel:

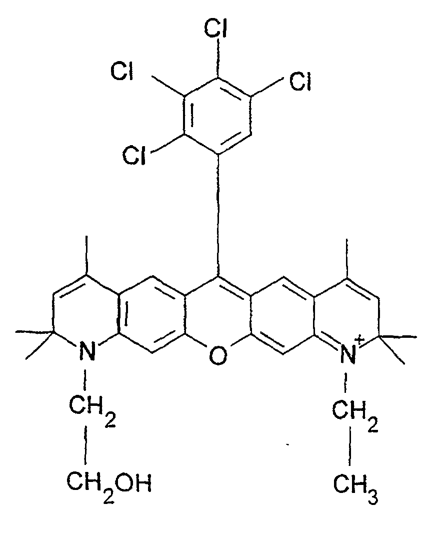

### Beispiel 2:

### Synthese eines erfindungsgemäßen Phosphoramidits

### 1-(2-(2-Cyano-ethoxy) diisopropylamino-phosphanyloxy) ethyl)-6-(2,3,4,5-tetrachlorophenil)-11-ethyl-2,2,4,8,10,11-hexamethyl-10,11-dihydro-2H-13-oxa-11 aza-1-azonia-pentaceneperchlorat

985 mg (1.5 mmol) des in Beispiel 1 hergestellten Rhodamin-Derivates (2-Hydroxyethyl)-6-(2,3,4,5-tetrachlorophenyl)-11-ethyl-2,2,4,8,10,11-hexamethyl-10,11-dihydro-2H-13-oxa-11-aza-1-azonia-pentacene perchlorat und 257 mg (1.5 mmol) Diisopropylamino tetrazolid wurden unter Argon in 50 ml trockenem Methylenchlorid gelöst. Nach Zugabe von 450 mg (1.5 mmol) Bis (N,N-diisopropylamino)-cyanoethylphosphin wurde 1h bei Raumtemperatur gerührt. Das Lösungsmittel wurde abdestilliert und der Rückstand in 150 ml Essigsäureethylester aufgenommen. Die Mischung wurde zweimal mit je 50 ml 5% Natriumhydrogencarbonatlösung gewaschen. Die organische Phase wurde über Natriumsulfat getrocknet, abfiltriert und anschließend das Lösungsmittel im Vakuum am Rotationsverdampfer abdestilliert. Der Rückstand wurde in Dioxan aufgenommen und mit Hexan gefällt. Der Niederschlag wurde abfiltriert, in Acetonitril gelöst und die Lösung über einen 0,45 ?m Filter (Millipore SLHV025NS) filtriert. Das Filtrat wurde im Vakuum bis zur Trockene eingedampft. Der Rückstand wurde aus 30 ml Dioxan lyophilisiert. Die Ausbeute betrug 1 g dunkelblaues Pulver.

### Beispiel 3:

### Herstellung eines markierten Oligonukleotids mit Hilfe eine Phosphoramidits:

### 1-(2-(2-Cyano-ethoxy) diisopropylamino-phosphanyloxy)ethyl)-6-(2,3,4,5-tetrachlorophenyl)-11-ethyl-2,2,4,8,10,11-hexamethyl-10,11-dihydro-2H-13-oxa-11-aza-1-azonia-pentacene perchlorat

Oligonukleotide wurden unter Standardbedingungen des Herstellers unter Verwendung von p-tert-Butyl-phenoxyacetyl geschützten Phosphoramiditen (PerSeptive Biosystems Cat. No. GEN 084290-084292) in einem ABI 394 Syntheziser hergestellt. Die gleiche Apparatur wurde zur Kopplung des Farbstoffs benutzt, indem anstelle der letzten Base am 5' Ende des synthetisierten Oligonukleotids eine 0.1 mmol Lösung der erfindungsgemäßen Phosphoramidites 1-(2-(2-cyano-ethoxy) diisopropylaminophosphanyloxy) ethyl)-6-(2,3,4,5-tetrachlorophenyl)-11-ethyl-2,2,4,8,10,11-hexamethyl-10,11-dihydro-2H-13-oxa-11-aza-1-azonia-pentacene perchlorat in Acetonitril eingesetzt wurde. Nach Oxidation unter Standardbedingungen und 2h Abspaltung des Oligonukleotids mit 25% Ammoniak bei Raumtemperatur wurde ein Oligonukleotid erhalten, das anschließend mittels HPLC (POROS OligoR3-Säule PerSeptive, Inc., Framingham, MA, 4,6 x 50 mm) aufgereinigt wurde. Die Elution des markierten Oligonukleotids wurde bei einer Flußgeschwindigkeit von 4 ml/min folgendermaßen durchgeführt:
Eluent A: Triethylammoniumacetat, 100 mmol/l; pH 6,9
Eluent B: Triethylammoniumacetat, 100 mmol/l, pH 6,9 /Acetonitril (1:1). Gradientenelution:
   - 2 min 100 % A
   - 10 min von 100 % Eluent A auf 100 % Eluent B.
   - Bei ca. 20 -25 % B (Elution unmarkiertes Oligo) und bei ca. 55-65 % (Elution markiertes Oligo) wurde durch Anhalten des Gradienten für ca. 2- 3 min isokratisch eluiert. Die Detektion des Elutionsprofils erfolgte optisch bei 260 nm.

### Beispiel 4:

### Synthese eines erfindungsgemäßen NHS-Esters

### 1-(-3-Carboxypropyl)-6-(2,3,4,5-tetrachlorophenyl)-11-ethyl-2,2,4,8,10,11-hexamethyl-10,11-dihydro-2H-13-oxa-11-aza-1-azonia-pentacene-O-succinimidester perchlorat.

Die Synthese der TetrachlorTetrachlor-Carboxyphenylvorstufe erfolgte in Analogie zu der in EP-0543 333 beschriebenen Synthesesequenz. Die Decarboxylierung erfolgte wie im Beispiel 1 beschrieben durch 5 h Rückflußsieden in o-Dichlorbenzol. Die Bereitstellung des Aktivesters erfolgte analog zur generellen Synthesevorschrift in EP 0543 333 in Gegenwart von Dicyclohexylcarbodiimid und N-Hydroxy-Succinimid.

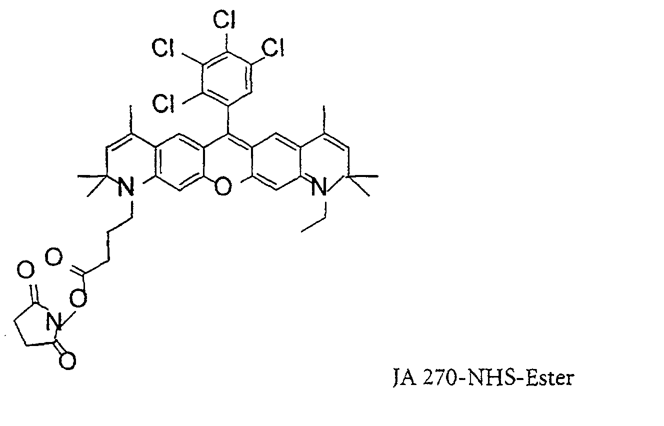

### Beispiel 5:

### Herstellung eines 5'-markierten Oligonukleotids mit Hilfe eines NHS-Esters:

### Markierung von Oligonukleotiden mit dem erfindungsgemäßen NHS-Ester 1-(-3-Carboxypropyl)-6-(2,3,4,5-tetrachlorophenyl)-11-ethyl-2,2,4,8,10,11-hexamethyl-10,11-dihydro-2H-13-oxa-11-aza-1-azonia-pentacene-O-succinimidester perchlorat.

Für die Markierungsreaktion wurde zunächst ein am 5'-Ende mit einer terminalen Aminogruppe substituiertes Oligonukleotid hergestellt. Die Einführung der 5'-terminalen Aminofunktion erfolgte in üblicher Weise durch Umsetzung des Oligonukleotides mit einem "Aminolinker"-Phosphoramidit, und zwar entweder mit "Aminolink 2" (Applied Biosystems, Foster City, CA) oder aber mit "5'-Amino-Modifier C6-TFA" (GLEN RESEARCH, Sterling, VA, cat. no. 10-1916-02). Durch Ethanolfällung präzipitiertes, aminomodifiziertes Oligonucleotid (ca. 10-15 A₂₆₀ Einheiten, entsprechend ca. 50-80 nmol) wurde in 200µl Natriumborat-Puffer, 0,1 mol/l, pH 8,5 gelöst. Nach Zugabe von 200 µl einer 1.26 mmolaren Lösung des erfindungsgemäßen NHS-Esters 1-(-3-Carboxypropyl)-6-(2,3,4,5-tetrachlorophenyl)-11 -ethyl-2,2,4,8,10,11-hexamethyl-10,11-dihydro-2H-13-oxa-11-aza-1-azoniapentacene-O-succinimidester perchlorat in DMF-Lösung wurde der Ansatz 15 h lichtgeschützt bei Raumtemperatur stehengelassen. Anschließend wurde das Gemisch in einer "SpeedVac" eingedampft (Heizung 50°C). Der Rückstand wurde in 1 ml bidest. Wasser gelöst, auf eine "POROS OligoR3"-Säule (PerSeptive, Inc., Framingham, MA), 4,6 x 50, aufgetragen und bei einer Fließgeschwindigkeit von 4 ml/min folgendermaßen eluiert:
Puffer A: Triethylammoniumacetat, 100 mmol/l; pH 6,9,
Puffer B: Triethylammoniumacetat, 100 mmol/l, pH 6,9 /Acetonitril (1:1)
Gradientenelution:
- 2 min 100 % Eluent A ( Elution N-Hydroxy-Succininimid)
- 10 min von 100 % Eluent A auf 100 % Eluent B. Bei ca. 20 -25 % B (Elution unmarkiertes Oligo)
- bei ca. 55-65 % (Elution markiertes Oligo) wurde durch Anhalten des Gradienten für ca. 2- 3 min isokratisch eluiert
- bei ca. 85 % eluierte der freie Farbstoff.

Die Detektion des Elutionsprofils erfolgte optisch bei 260 nm.

### Beispiel 6:

### Quantitative RT-PCR durch on-line Detektion während der Amplifikation

Ein nach der in Beispiel 3 beschriebenen Methode am 5'-Ende mithilfe eines erfindungsgemäßen Phosphoramidites markiertes Oligonukleotid wurde als Teil eines FRET-Paares zum quantitativen Nachweis einer amplifizierten Nukleinsäure verwendet. Dazu wurde in vitro-transkribierteRNA des TNF-alpha Gens (Shirai et al., Nature 313, 803-806, 1985) als Matrize titriert (10⁹ 10⁷ Kopien/Ansatz) und über eine 1-Schritt-RT-PCR amplifiziert. Der RT-PCR-Ansatz enthielt zwei unterschiedlich markierte Hybridisierungssonden zur on-line Detektion während der einzelnen PCR-Schritte. Die downstream gelegene Sonde war erfindungsgemäß 5'-JA270-markiert, die upstream gelegene Sonde war 3'-Fluorescein markiert. Beide Sonden hybridisierten nur wenige Basen voneinander getrennt gegen die Sequenz des Amplikons, sodaß im hybridisierten Zustand ein Fluoreszenz-Resonanz-Energie-Transfer (FRET) zwischen den beiden Markierungen stattfinden konnte.

Jeder der drei Reaktionsansätze enthielt: 2,5 U Tth DNA-Polymerase, 1x RT-PCR-Puffer (Tth DNA-Polymerase-Kit), 4 mM Mn²⁺, 300 µM dATP, 300 µM dCTP, 300 µM dGTP und 900 µM dUTP, 500 ng BSA, 1 µl in-vitro transkribierte RNA (10⁹, 108 und 10⁷ Kopien), 1 µM Forward-Primer (17mer, Nukleotid-Pos. 2588-2604), 1 µM Reverse-Primer (17mer, Nukleotid-Pos. 2956-2973), 0,4 µM TNF-alpha(wt) spezifische 3'-Fluorescein-markierte Hybridisierungs-Sonde (25mer, Nukleotid-Pos. 2638-2662) und 0,4 µM TNF-alpha(wt) spezifische, gemäß der Erfindung 5'JA270-Phosphoramiditmarkierte Hybridisierungs-Sonde (25mer, Nukleotid-Pos. 2666-2690).

Die Reaktionsansätze wurden zur Amplifikation in Kapillaren pipettiert und in einem zur On-Line-Fluoreszenzdetektion während einer Amplifikationsreaktion geeigneten LightCycler (Wittwer et al., BioTechniques 12, 176-181, 1997) folgenden Thermozyklen ausgesetzt: In 10 min bei 55°C wurde die Matrizen-RNA revers transkribiert (Temperaturrampe 20°C/s, keine Messung). Danach wurde die cDNA 30 sec bei 95°C denaturiert (Temperaturrampe 20°C/s, keine Messung). Dann wurde die cDNA in 45 Cyclen mit Hilfe einer Polymerase-Ketten-Reaktion (PCR) amplifiziert. Im ersten Schritt der PCR wurde die Matrize 1 sec bei 99°C denaturiert (Temperaturrampe 20°C/s, keine Messung). Im zweiten Schritt der PCR, innerhalb von 15 sec bei 50°C, hybridisierten die spezifischen forward und reverse Primer sowie die beiden TNF-alpha(wt)-spezifischen Hybridisierungsproben an die Matrize, sodaß ein FRET-Effekt detektierbar wurde. Die entstandene Fluoreszenz wurde am Ende der Annealingzeit in jeder Kapillare gemäß den Angaben des Herstellers gemessen (Temperaturrampe 20°C/s, einfache Messung). Im dritten Schritt erfolgte die Polymerisation in 18 sec bei 72°C (Temperaturrampe 20°C/s, keine Messung). Nach 45 Cyclen PCR-Reaktion wurden die Kapillaren 45 sec lang auf 40°C abgekühlt.

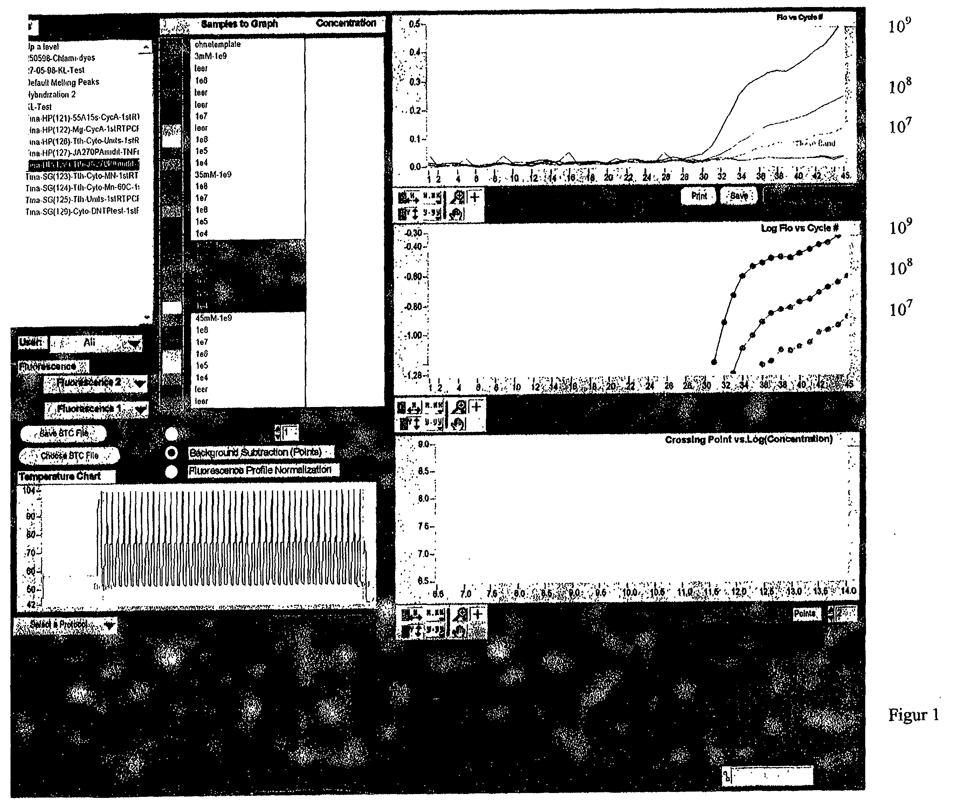

Die in Abbildung 1 dargestellte Auswertung erfolgte mit einem Quantifizierungsprogramm des LightCyclers gemäß den Angaben des Herstellers. In dem dargestellten Experiment konnten 10⁹ 10⁷ Kopien in-vitro transkribierter RNA nachgewiesen und mengenmäßig titriert werden, wobei 10⁹ Kopien erstmals nach 31 Zyklen, 10⁸ Kopien erstmals nach 33 Zyklen und 10⁷ Kopien erstmals nach 36 Zyklen detektierbar waren.

### Beispiel 7:

### Mutationsanalyse über Schmelzkurvenbestimmung mithilfe von FRET-Paaren

Ein nach der in Beispiel 3 beschriebenen Methode am 5'-Ende markiertes Oligonukleotid wurde als Teil eines FRET-Paares zum Nachweis der Punktmutation G zu A an Nukleotidposition 1691in Exon 10 des humanen FaktorV-Gens (Bertina et al., Nature 369, S. 64, 1994) verwendet. Hierzu wurde ein spezifisches genomisches Faktor V-Fragment mit Hilfe einer PCRPCR-Amplifikationsreaktion in einem LightCycler (Wittwer et al., BioTechniques 12,176-181,1997) amplifiziert. Der PCR-Ansatz (20 µl) enthielt 50 mM Tris, pH8,3, 3 mM MgCl₂, 250 µg/ml BSA, 200 µM dATP, 200 µM dGTP, 200 µM dCTP, 600 µM dUTP, 0.2 µM forward Primer (Nukleotid-Pos. 1626-1647 aus Exon10) O,2 µM reverse Primer (Nukleotid-Pos. 127-146 aus Intron 10) ,0,1 µM 3'-Fluorescein markierte Hybridisierungssonde (Nukleotid-Pos. 1684-1701 aus Exon10 + 1-5 aus Intron 10), 0,5 µM gemäß der Erfindung 5'JA270 markierte Hybridisierungssonde (Nukleotid-Pos. 1647-1682, Exon10) und 1,6 U Taq Polymerase. Zusätzlich befanden sich in den drei Ansätzen entweder 1 ng FaktorV Wildtyp Plasmid-DNA, 1ng heterozygote Plasmid-DNA oder Ing homozygot mutante Plasmid-DNA. Die an die Mutationsstelle hybridisierende, 3'-markierte Sonde war vollständig komplementär zur Wildtyp DNA-Sequenz.
Die zweite erfindungsgemäß 5' markierte Sonde hybridisierte upstream von der 3' markierten Sonde, sodaß beide Markierungen durch nur eine Base getrennt waren und ein Resonanz -Energie-Transfer erfolgen konnte. Während der im Anschluß an die Amplifikationsreaktion durchgeführten Schmelzkurve schmolz die kürzere, 3'-markierte Sonde zuerst ab, sodaß ein Resonanz-Energie-Transfer nicht mehr möglich war. Denaturierung, Amplifikation und anschließende Schmelzkurve wurden im LightCycler unter folgenden Bedingungen durchgeführt:

| 1. Denaturierung (1 Zyklus) | | | |
|---|---|---|---|
| Zeit | Temperatur | Temperaturrampe | Messung |
| 30 sec | 95°C | 20°C/sec | keine |

| 2. Amplifikation (50 Zyklen) | | | |
|---|---|---|---|
| Zeit | Temperatur | Temperaturrampe | Messung |
| 0 sec | 95°C | 20°C/sec | keine |
| 10 sec | 50°C | 20°C/sec | Einzelmessung |
| 10 sec | 72°C | 5°C/sec | keine |

| 3. Schmelzkurve (1 Zyklus) | | | |
|---|---|---|---|
| Zeit | Temperatur | Temperaturrampe | Messung |
| 0 sec | 95°C | 20°C/sec | keine |
| 10 sec | 45°C | 20°C/sec | keine |
| 0 sec | 85°C | 0,2°C/sec | kontinuierliche Messung |

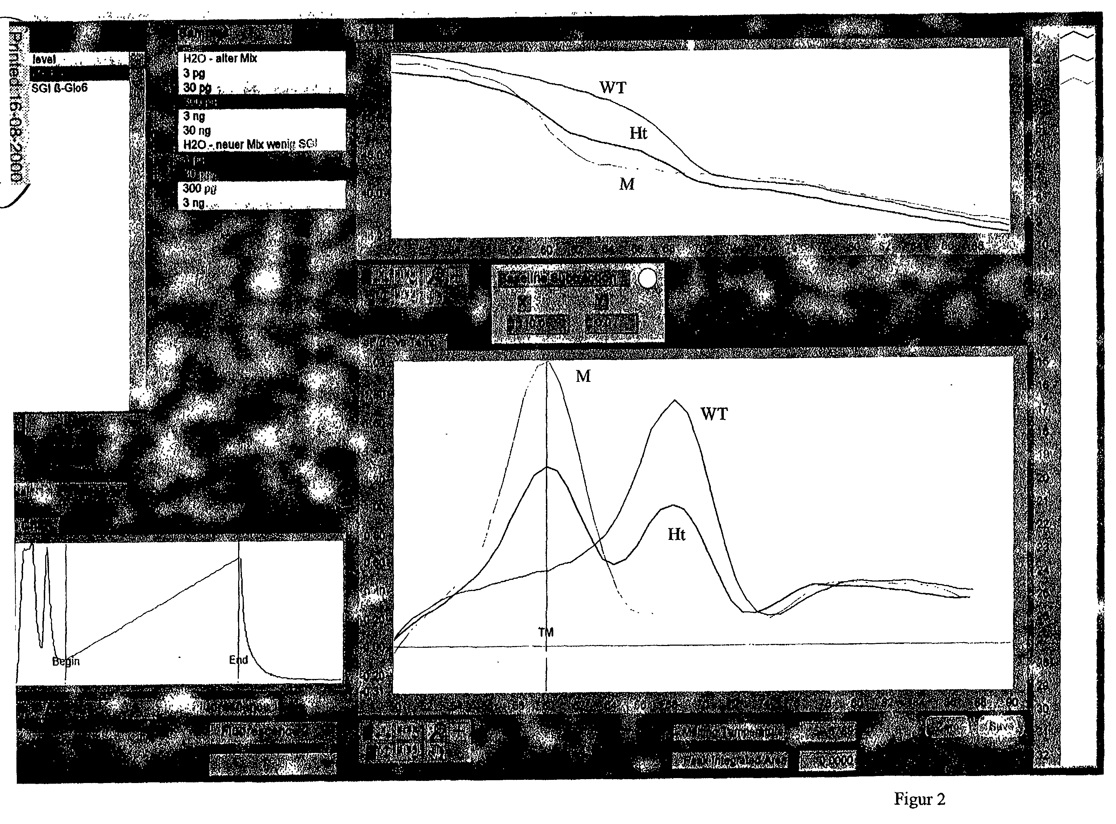

Wie in Abbildung 2 dargestellt, konnte mit Hilfe der gemessenen Schmelzkurve und der daraus resultierenden negativen ersten Ableitung der Fluoreszenzintensität in Abhängigkeit von der Schmelztemperatur bestimmt werden, bei welchen Temperaturen die gegen den Locus der Punktmutation gerichtete Hybridisierungssonde abschmolz. Im Falle der FaktorV Wildtyp Plasmid-DNA lag der Schmelzpunkt bei 68°C, bei homozygot mutanter FaktorV Plasmid-DNA bei 60°C und bei heterozygoter Faktor V Plasmid-DNA bei 60°C und 68°C.

### Kurzbeschreibung der Abbildungen:

Abbildung 1 zeigt das Ergebnis des in Beispiel 6 beschriebenen Experiments zur Quantifizierung von mRNA durch Detektion eines Amplifikationsproduktes mithilfe eines FRET-Paares, wobei eine Komponente des FRET-Paares ein erfindungsgemäß markiertes Oligonukleotid war. Die Kurven stellen die gemessene Fluoreszenz in Abhängigkeit von der Anzahl der durchgeführten Zyklen graphisch dar. 10⁹ Kopien sind erstmals nach 31 Zyklen, 108 Kopien erstmals nach 33 Zyklen und 10⁷ Kopien erstmals nach 36 Zyklen detektierbar.

Abbildung 2 zeigt das Ergebnis des in Beispiel 7 beschriebenen Experiments zur Mutationsanalyse des FaktorV-Gens mithilfe einer Schmelzkurvenbestimmung, wobei eine Komponente des FRET-Paares ein erfindungsgemäß markiertes Oligonukleotid war. Die Kurven stellen die gemessene Fluoreszenz bzw. deren negative 1. Ableitung in Abhängigkeit von der Schmelztemperatur graphisch dar (WT: Wildtyp, M: Homozygote DNA; Ht: Heterozygote DNA).

## Patentansprüche

1. Verbindungen der allgemeinen Formeln 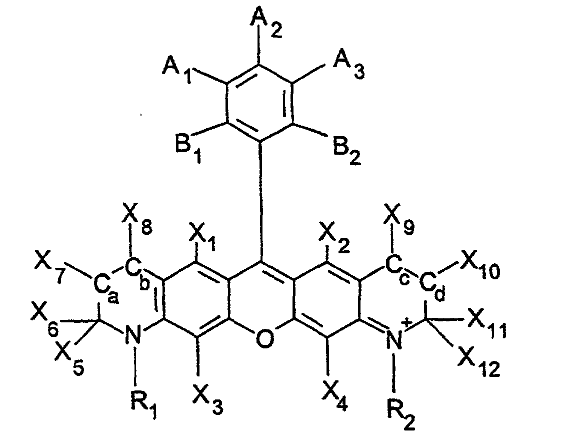 wobei
Ca-Cd jeweils ein C-Atom bedeutet und Ca mit Cb sowie Cc mit Cd untereinander entweder durch eine Einfachbindung oder durch eine Doppelbindung miteinander verbunden sind;
X1 bis X12 unabhängig voneinander ausgewählt werden aus einer Gruppe bestehend aus Halogen, Sulfonsäure, Wasserstoff und einem Alkylrest mit 1-20 C-Atomen, wobei der Alkylrest mit einem oder mehreren Halogen- oder Sulfonsäureresten substituiert sein kann;
R1 und R2 entweder identisch oder verschieden sind und ausgewählt werden aus einer Gruppe bestehend aus Wasserstoff, Alkyl mit 1-20 C-Atomen, Polyoxyhydrocarbyleinheiten, Phenyl und Phenylalkyl mit 1-3 Kohlenstoffatomen in der Alkylkette, worin die Alkyl- und/oder Phenylreste durch eine oder mehrere Hydroxy-, Halogen-, Sulfonsäure-, Amino-, Carboxy- oder Alkoxycarbonylgruppen, worin Alkoxy 1-4 Kohlenstoffatome besitzen kann, substituiert sein können;
mindestens R1 mindestens eine aktivierbare Gruppe enthält, die entweder eine Aminogruppe, eine Hydroxylgruppe oder eine Carboxylgruppe ist, und R2 und X4 fakultativ über eine Brücke bestehend aus 0-2 C-Atomen miteinander verknüpft sein können;
dadurch gekennzeichnet, daß
A1, A2 und A3 unabhängig voneinander ausgewählt werden aus einer Gruppe bestehend aus Wasserstoff, Cyano-, Halogen- und Sulfonsäure;
B1 entweder Halogen, Cyano oder Wasserstoff bedeutet;
B2 ausgewählt wird aus einer Gruppe bestehend aus Wasserstoff, Amid, Halogen und einem Alkylrest mit 1-20 C-Atomen.

2. Verbindungen nach Anspruch 1, dadurch gekennzeichnet, daß alle Reste der Gruppe bestehend aus A1, A2, A3, B1 und B2 entweder Fluor oder Chlor bedeuten.

3. Verbindungen nach Anspruch 1, dadurch gekennzeichnet, daß alle Reste der Gruppe bestehend aus A1, A2, A3 und B1 entweder Fluor oder Chlor bedeuten; und daß B2 Wasserstoffbedeutet.

4. Verbindungen nach Anspruch 1-3, dadurch gekennzeichnet, daß X1, X2, X3, X4, X7 und X10 Wasserstoff bedeuten, und/oder X5, X6, X8, X9, X11 und X12 Methyl bedeuten.

5. Aktivierte Derivate der Verbindungen nach Anspruch 1-4. wobei die aktivierte Gruppe ausgewählt wird aus einer Gruppe bestehend aus Phosphoramidit, N-Hydroxysuccininimid, Maleinimid, H-Phosphonat und Isothiocyanat.

6. Konjugate, erhältlich aus einer Verbindung nach Anspruch 1-5.

7. Konjugate nach Anspruch 6, enthaltend mindestens ein Molekül ausgewählt aus einer Gruppe bestehend aus Carbohydraten, Proteinen, Antikörpern, Nukleinsäuren Nukleinsäureanaloga, Nukleotiden, Nukleotidanaloga, Haptenen, Hormonen und Vitaminen.

8. Konjugate nach Anspruch 7, bei denen das Biomolekül ein Oligonukleotid oder ein Nucleosid-Triphosphat ist

9. Verwendung einer Verbindung nach Anspruch 1-5 als Fluoreszenzfarbstoff.

10. Verwendung einer Verbindung nach Anspruch 1-8 zusammen mit einem anderen Farbstoff oder einem anderen Farbstoff-Konjugat als Fluoreszenz-Resonanz-Energie-Transfer-System.

11. Verwendung einer Verbindung nach Anspruch 1-8 in analytischen oder diagnostischen Systemen.

12. Verwendung einer Verbindung nach Anspruch 8 zur Markierung und/oder Detektion von Nukleinsäuren.

13. Verwendung nach Anspruch 12, wobei mindestens ein zweites Konjugat, bestehend aus einem anderen Fluoreszenzfarbstoff und einem zweiten Oligonukleotid, eingesetzt wird und nach Anregung eines Farbstoffs ein Fluoreszenz-Resonanz-Energie-Transfer stattfinden kann.

14. Verwendung nach Anspruch 12-13, wobei als Nukleinsäure ein Produkt einer Amplifikationsreaktion detektiert wird.

15. Verwendung nach Anspruch 14, wobei das Produkt während oder nach jedem Amplifikationszyklus detektiert wird.

16. Verwendung nach Anspruch 14, wobei eine Schmelzkurvenanalyse durchgeführt wird.

## Claims

1. Compounds of the general formula 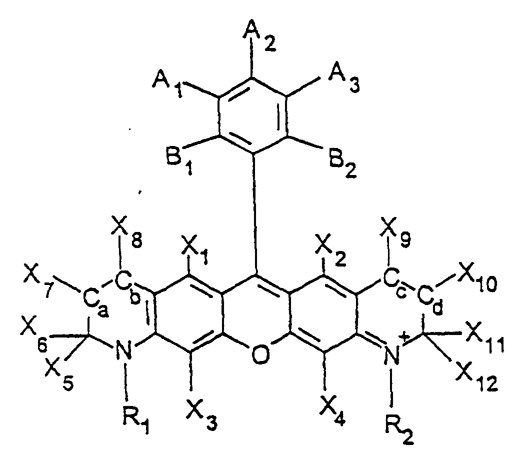 in which
Ca-Cd each denote a C atom, and Ca and Cb as well as Cc and Cd are either linked together by a single bond or by a double bond;
X1 to X12 are independently of one another selected from a group comprising halogen, sulfonic acid, hydrogen and an alkyl residue with 1-20 C atoms in which the alkyl residue can be substituted with one or several halogen or sulfonic acid residues;
R1 and R2 are either identical or different and are selected from a group comprising hydrogen, alkyl with 1-20 C atoms, polyoxyhydrocarbyl units, phenyl and phenylalkyl with 1-3 carbon atoms in the alkyl chain in which the alkyl and/or phenyl residues can be substituted by one or several hydroxy, halogen, sulfonic acid, amino, carboxy or alkoxycarbonyl groups where alkoxy can have 1-4 carbon atoms at least R1 contains at least one activatable group which is either an amino group, a hydroxyl group or a carboxyl group,
and R2 and X4 can be optionally linked together by a bridge composed of 0-2 C atoms,
wherein
A1, A2 and A3 are independently of one another selected from a group comprising hydrogen, cyano, halogen and sulfonic acid;
B1 denotes either halogen, cyano or hydrogen;
B2 is selected from a group comprising hydrogen, amide, halogen and an alkyl residue with 1-20 C atoms.

2. Compounds as claimed in claim 1, wherein all residues of the group comprising A1, A2, A3, B1 and B2 denote either fluorine or chlorine.

3. Compounds as claimed in claim 1, wherein all residues of the group comprising A1, A2, A3 and H1 denote either fluorine or chlorine; and B2 denotes hydrogen.

4. Compounds as claimed in claims 1-3, wherein X1, X2, X3, X4, X7 and X10 denote hydrogen and/or X5, X6, X8, X9, X11 and X12 denote methyl.

5. Activated derivatives of the compounds as claimed in claims 1-4, wherein the activated group is selected from a group comprising phosphoramidite, N-hydroxysuccinimide, maleinimide, H-phosphonate and isothiocyanate.

6. Conjugates obtainable from a compound as claimed in claims 1-5.

7. Conjugates as claimed in claim 6, containing at least one molecule selected from a group comprising carbohydrates, proteins, antibodies, nucleic acids, nucleic acid analogues, nucleotides, nucleotide analogues, haptens, hormones and vitamins.

8. Conjugates as claimed in claim 7, in which the biomolecule is an oligonucleotide or a nucleoside triphosphate.

9. Use of a compound as claimed in claims 1-5 as a fluorescent dye.

10. Use of a compound as claimed in claims 1-8 together with another dye or another dye conjugate as a fluorescence resonance energy transfer system.

11. Use of a compound as claimed in claims 1-8 in analytical or diagnostic systems.

12. Use of a compound as claimed in claim 8 for labelling and/or detecting nucleic acids.

13. Use as claimed in claim 12, wherein at least one second conjugate composed of another fluorescent dye and a second oligonucleotide is used and a fluorescence resonance energy transfer can take place after excitation of a dye.

14. Use as claimed in claims 12-13, wherein a product of an amplification reaction is detected as the nucleic acid.

15. Use as claimed in claim 14, wherein the product is detected during or after each amplification cycle.

16. Use as claimed in claim 14, wherein a melting curve analysis is carried out.

## Revendications

1. Composés répondant aux formules générales 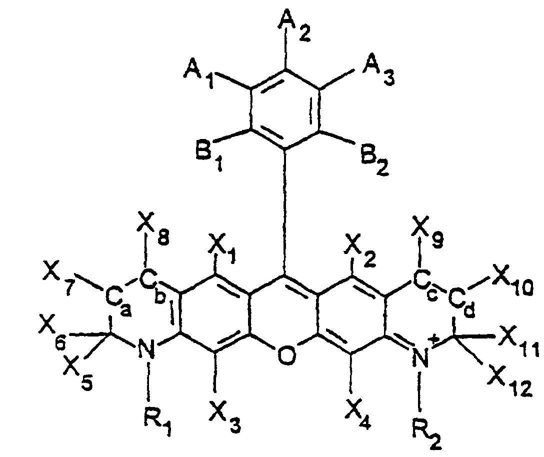 dans lesquelles
Ca - Cd signifient respectivement un atome de carbone et Ca et Cb, de même que Cc et Cd sont reliés ensemble soit par une simple liaison, soit par une double liaison ;
X₁ à X₁₂ sont choisis indépendamment les uns des autres dans le groupe constitué d'un atome d'halogène, d'un acide sulfonique, d'un atome d'hydrogène et d'un résidu alkylique avec 1 à 20 atomes de carbone, le résidu alkylique pouvant être substitué par un ou plusieurs résidus d'halogène ou d'acide sulfonique ;
R₁ et R₂ sont soit identiques, soit différents et sont choisis dans un groupe constitué d'un atome d'hydrogène, d'un groupe alkyle avec 1 à 20 atomes de carbone, d'unités polyoxyhydrocarbyles, d'un groupe phényle et d'un groupe phénylalkyle avec 1 à 3 atomes de carbone dans la chaîne alkyle, les résidus alkyles et/ou phényles pouvant être substitués par un ou plusieurs groupes hydroxyles, atomes d'halogène, groupes d'acide sulfonique, groupes amino, groupes carboxyles ou groupes alcoxycarbonyles, où un groupe alcoxy peut posséder un à quatre atomes de carbone ; du moins R₁ contient au moins un groupe activable qui est un groupe amino, un groupe hydroxyle ou bien un groupe carboxyle, et R₂ et X₄ peuvent être reliés ensemble facultativement par un pont constitué de 0 à 2 atomes de carbone ;
caractérisés en ce que
A₁, A₂ et A₃ sont choisis indépendamment les uns des autres dans un groupe constitué d'un atome d'hydrogène, d'un groupe cyano, d'un atome d'halogène et d'un groupe d'acide sulfonique ;
B₁ signifie un atome d'halogène, un groupe cyano ou bien un atome d'hydrogène ;
B₂ est choisi dans un groupe constitué d'un atome d'hydrogène, d'un groupe amide, d'un atome d'halogène et d'un résidu alkyle avec 1 à 20 atomes de carbone.

2. Composés selon la revendication 1, caractérisés en ce que tous les résidus du groupe constitué de A₁, A₂, A₃, B₁ et B₂ signifient soit un atome de fluor, soit un atome de chlore.

3. Composés selon la revendication 1, caractérisés en ce que tous les résidus du groupe constitué de A₁, A₂, A₃ et B₁ signifient soit un atome de fluor, soit un atome de chlore ; et en ce que B₂ signifie un atome d'hydrogène.

4. Composés selon les revendications 1 à 3, caractérisés en ce que X₁, X₂, X₃, X₄, X₇ et X₁₀ signifient un atome d'hydrogène et/ou X₅, 6ₑ, X₈, X₉, X₁₁ et X₁₂ signifient un groupe méthyle.

5. Dérivés activés des composés selon les revendications 1 à 4, le groupe activé étant choisi dans un groupe constitué du phosphoramidite, du N-hydroxysuccinimide, du maléinimide, du H-phosphonate et de l'isothiocyanate.

6. Conjugués pouvant être obtenus à partir d'un composé selon les revendications 1 à 5.

7. Conjugués selon la revendication 6, contenant au moins une molécule choisie dans un groupe constitué des hydrates de carbone, des protéines, des anticorps, des acides nucléiques, des analogues d'acide nucléique, des nucléotides, des analogues de nucléotide, des haptènes, des hormones et des vitamines.

8. Conjugués selon la revendication 7, dans lesquels la biomolécule est un oligonucléotide ou un nucléoside triphosphate.

9. Utilisation d'un composé selon les revendications 1 à 5, à titre de colorant fluorescent.

10. Utilisation d'un composé selon les revendications 1 à 8, ensemble avec un autre colorant ou un autre conjugué de colorant à titre de système de transfert d'énergie de fluorescence par résonance.

11. Utilisation d'un composé selon les revendications 1 à 8, dans des systèmes analytiques ou diagnostiques.

12. Utilisation d'un composé selon la revendication 8, pour le marquage et/ou la détection d'acides nucléiques.

13. Utilisation selon la revendication 12, dans laquelle on utilise au moins un deuxième conjugué, constitué d'un autre colorant fluorescent et d'un deuxième oligonucléotide et dans laquelle, après l'excitation d'un colorant, il peut se produire un transfert d'énergie de fluorescence par résonance.

14. Utilisation selon les revendications 12 à 13, dans laquelle on détecte à titre d'acide nucléique un produit d'une réaction d'amplification.

15. Utilisation selon la revendication 14, dans laquelle le produit est détecté pendant ou après chaque cycle d'amplification.

16. Utilisation selon la revendication 14, dans laquelle on effectue une analyse des courbes de fusion.
